# EUROPÄISCHE PATENTSCHRIFT

(11) **EP 0 539 561 B1**
(45) Veröffentlichungstag und Bekanntmachung des Hinweises auf die Patenterteilung: **30.08.1995**
(21) Anmeldenummer: 92910547.6
(22) Anmeldetag: 11.05.1992
(51) Int. Cl.: G01F 1/10, G01P 5/07

(54) **DURCHFLUSSMESSER**
FLOW METER
DEBITMETRE

(30) Priorität: 14.05.1991 CH 1440/91
(43) Veröffentlichungstag der Anmeldung: 05.05.1993
(73) Patentinhaber: TEUNISSEN, Theodora Antonia, NL-6536 CD Nijmegen (NL)
(72) Erfinder: TEUNISSEN, Theodora Antonia, NL-6536 CD Nijmegen (NL)
(74) Vertreter: Patentanwälte Schaad, Balass, Menzl & Partner AG
(86) Internationale Anmeldenummer: EP9201037
(87) Internationale Veröffentlichungsnummer: WO9221004

(56) Entgegenhaltungen:
- EP-A- 0 228 577
- DE-A- 2 047 785

## Beschreibung

Die Erfindung betrifft einen Durchflussmesser nach dem Oberbegriff des Anspruchs 1.

Ein Durchflussmesser der angegebenen Art ist beispielsweise aus der europäischen Patentschrift 0 228 577 bekannt. Bei diesem Durchflussmesser ist in Strömungsrichtung vor dem in einem Durchlass für das Medium angeordneten Rotor ein schraubenförmiger Leitapparat zur Erzeugung eines Dralls angeordnet, um die achsparallel sich erstreckenden und in Umfangsrichtung gebogenen Flügel des Rotors zu beaufschlagen und den letzteren in Drehung zu versetzen. Jeder Flügel des Rotors besitzt ein als achsparalleler Schlitz ausgebildetes Fenster. Ein rechtwinklig zur Rotorachse gerichteter Strahl einer Lichtschranke, von der die Lichtquelle auf der einen Seite und der Lichtempfänger auf der gegenüberliegenden Seite des Rotors am Gehäuse angeordnet sind, passiert das Fenster. Dieses Prinzip setzt allerdings voraus, dass das Medium, dessen Durchflussmenge gemessen werden soll, für den Durchtritt des Lichtstrahls der Lichtschranke transparent ist und schränkt dessen Einsatzmöglichkeiten ein. Darüberhinaus ist die Anzahl der pro Rotorumdrehung zu erhaltenen Impulse für die Messung bei zu passierenden Flügelfenstern aus Gründen der Flügelüberlappung auf drei beschränkt.

Während der bekannte Durchflussmesser bei Anwendungen mit grösseren Durchflussmengen zuverlässig abeitet, zeigt sich bei kleinen Mengen, dass er nicht imstande ist, genaue Messergebnisse zu liefern.

Aus der DE-A-2 047 785 ist ein Durchflussanzeiger mit visueller Drehzahl- bzw. Durchfluss-Ermittlung bekannt. Dabei ist ein in einem Gehäuse angeordneter, mit Flügeln ausgestatter Rotor durch an einer Oberfläche angebrachte ringförmige Bänder mit wechselnd hell und dunkeln Feldern versehen. Die Oberfläche ist entweder jene der Schaufeln oder die Aussenseite eines diese an ihrem Umfang umgebenden Mantels. Das Gehäuse weist ein geeignet angeordnetes Fenster auf.

Der vorliegenden Erfindung liegt daher die Aufgabe zugrunde, einen kostengünstig herstellbaren Durchflussmesser zu schaffen, der aufgrund genauer Messergebnisse auch bei kleinsten Mengen universell einsetzbar ist.

Zur Lösung dieser Aufgabe weist der Durchflussmesser die Merkmale nach Anspruch 1 auf.

Die Verwendung eines Ringes am Rotor in Kombination mit der Beaufschlagung der gekrümmten Flügel auf ihrer konkaven Seite erbringt eine Erhöhung der Ansprechempfindlickeit desselben. Ursächlich dürfte dabei eine annähernd vollständige Nutzung der kinetischen Energie der Strömung sein, deren Durchfluss gemessen werden soll. Dies geschieht durch das Verhindern einer radialen Abströmung im Flügelbereich. Dabei lässt sich der Ring durch die starre Verankerung der Flügel auch an deren äusseren Enden zum Versteifen derselben nutzen. Dies gestattet, die Flügel-Masse ohne Verringerung der beaufschlagten Fläche herabzusetzen. Die Gesamtmasse des Rotors erfährt durch den Ring somit keine Zunahme.

Vorzugsweise ist der Ring mit den Flügeln und der Rotorachse zusammen einstückig ausgebildet, was sowohl der Steifigkeit, als auch der Massenverringerung zugute kommt. Ein einstückig hergestellter Rotor lässt zudem entsprechende Montagekosten vermeiden.

Gemäss einer bevorzugten Weiterbildung des erfindungsgemässen Durchflussmessers werden die Zähl- bzw. Messignale durch Abtastung der mit Markierungen versehenen

Aussenfläche des Rotorringes gewonnen. Da somit der Durchflussmesser keinen Strahlengang für eine Lichtschranke freigeben muss, vereinfacht sich die Rotorform. Die universelle Anwendbarkeit des Durchflussmessers wird hierdurch u. a. weiter erhöht, indem das Medium nicht transparent sein muss. Davon abgesehen, kann pro Umdrehung eine praktisch beliebig grosse Signalzahl erzeugt werden.

Weitere Einzelheiten und Vorteile ergeben sich aus der nachfolgenden Beschreibung, in der eine Ausführungsform des Durchflussmessers anhand der Zeichnungen rein beispielsweise näher beschrieben wird. Es zeigen:

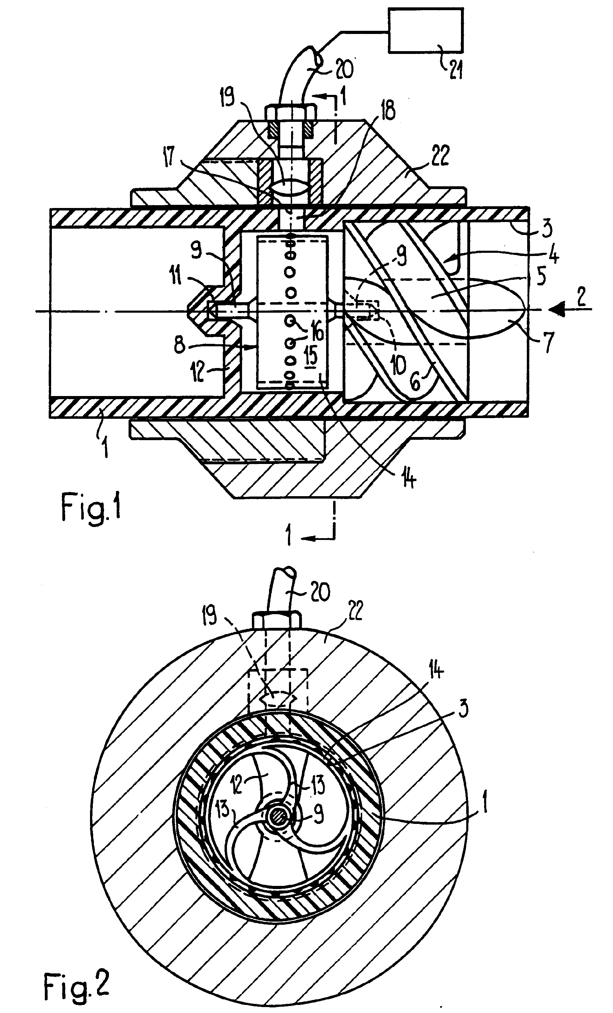

- Fig. 1: einen Längsschnitt durch einen Durchflussmesser, etwa im zehnfach vergrösserten Massstab,
- Fig. 2: einen Querschnitt durch den Durchflussmesser längs der Linie 1-1 in Fig. 1.

Der Durchflussmesser weist ein Innengehäuse 1 auf, das rohrförmig ausgebidet ist, vorzugsweise aus Kunststoffmaterial besteht und an beiden Enden an Schlauchleitungen anschliessbar ist. Ein flüssiges Medium durchströmt das Innengehäuse 1 in Richtung des Pfeils 2 von rechts nach links. In dem zylindrischen Durchlass 3 des Innengehäuses 1 ist ein als mehrgängige Schraube oder Schnecke ausgebildeter Leitapparat 4 angeordnet. Ein axialer Kern 5, von dem die Gewindegänge 6 ausgehen, ist anströmseitig nach vorn in einen Stromlinienkörper 7 verlängert. Dieser Leitapparat teilt das einströmende Medium in verschiedene Teilströme auf, die dabei eine Drallbewegung erhalten und beschleunigt werden.

In Strömungsrichtung hinter dem Leitapparat 5 ist ein Rotor 8 angeordnet. Die Rotorachse 9 ist auf der Anströmseite in einer im Kern 5 des Leitapparates 4 ausgebildeten Bohrung 10 mit Spiel gelagert. Auf der anderen Seite ist die Rotorachse 9 ebenfalls mit Spiel in einer Bohrung 11 gelagert, die in einer den Durchlass 3 quer durchsetzenden schmalen Traverse 12 ausgebildet ist.

An der Rotorachse 9 sind drei umfangsmässig verteilt angeordnete, unter sich identische Flügel 13 in achsparalleler Lage befestigt, die über ihre radiale Erstreckung um eine oder mehrere, ausschliesslich achsparallele Krümmungsachsen gekrümmt sind. Die dünnwandigen Flügel 13 sind vollflächig und weisen im dargestellten Ausführungsbeispiel eine über die radiale Erstreckung gleichbleibende achsiale Erstreckung auf. Die Flügelenden an einem zur Rotorachse 9 koaxialen, zylindrischen Ring 14 befestigt. Der dargestellte Ring 14 ist gleich breit wie die Breite der Flügel 13, was einer vorteilhaften Ausgestaltung entspricht. Allerdings kann die axiale Erstreckung des Ringes sowohl grösser als auch kleiner als jene der Flügel sein. Ebenso ist eine in axialer Richtung symmetrische Anordnung des Ringes in bezug auf die Flügel nicht erforderlich. Es kann auch eine Anordnung zweckmässig sein, bei der der Ring in Achsrichtung versetzt so angeordnet ist, dass er die Flügel an der einen Seite frei lässt und axial nach der anderen Seite über diese vorsteht. Jedenfalls ist der Ring vollflächig und weist in parallelen Radialebenen liegende Stirnseiten auf.

Die Krümmung der Rotorflügel 13 ist so ausgelegt, dass diese an ihrer konkav gekrümmten Seite von der vom Leitapparat 5 gebildeten schraubenförmigen Strömung beaufschlagt werden.

Zweckmässig ist in jedem Fall der Rotor, bestehend aus Rotorachse 9, Flügel 13 und Ring 14, einstückig ausgebildet. Dies ergibt selbst bei dünnwandigster Ausbildung der Flügel und des Ringes hohe Festigkeit bzw. Formstabilität bei geringster Rotormasse. Dabei lässt sich ein solcher einstückiger Rotor mit einem relativ einfachen Werkzeug in einem Spritzverfahren, z.B. aus Kunststoffmaterial herstellen, wenn die Flügel nur um Achsen gekrümmt sind, die parallel zur Achse des Rotors verlaufen.

Wesentlich für den erfindungsgemässen Durchflussmesser bzw. dessen dynamisches Verhalten ist jedoch, dass die Ausgestaltung und/oder Anordnung des Ringes 14 am Rotor ein Abströmen des Mediums in angenähert axialer Richtung erzwingt und insbesondere an den radial äusseren Enden der Flügel 13 eine radiales Abströmen verhindert. Da damit Spaltverluste zwischen Rotor und umgebendem Durchlass schon weitgehend ausgeschlossen werden, bleibt die Strömungsenergie des Mediums vollständig für die Beaufschlagung der Flügel erhalten. Es hat sich gezeigt, dass die Beaufschlagung der Flügel an der konkaven Seite zusammen mit dem Ring die Ansprechempfindlickeit wesentlich erhöht und mithilft, die Messgenauigkeit, insbesondere bei kleinen Durchflussmengen zu steigern.

Der in der Zeichnung sichbare Spalt zwischen Rotor-Ring 14 und der Innenwand des Durchlasses ist in seiner radialen Dimension selbstverständlich nicht massstablich gezeigt und in Wirklichkeit sehr schmal. Mittels einer vor oder, wie dargestellt, nach dem Ring (in Strömungsrichtung betrachtet) angeordneten einwärtsragenden Umfangsschulter im Durchlass lässt sich ein Abströmen von Medium am Rotor vorbei weitestgehend vermeiden.

Erstreckt sich der Ring 14 insbesondere stromabwärts weniger weit als die Flügel 13, so muss der Innendurchmesser des Durchlasses dort annähernd gleich sein wie der Innendurchmesser des Ringes, um ein radiales Abströmen des Mediums zu vermeiden.

Auf der Aussenumfangsfläche 15 des Rings 14 sind auf einer Kreislinie in gleichen Winkelabständen voneinander eine Vielzahl von Markierungen 16 ausgebildet oder angeordnet. Die Markierungen sind vorzugsweise bei der Herstellung des Rings in die Fläche eingearbeitete Vertiefungen; es sind auch Farbmarkierungen möglich. Die Markierungen 16 werden bei drehendem Rotor 8 von einem gegen die Aussenfläche 15 des Ringes 14 gerichteten Lichtstrahl 17 erfasst, beispielsweise von einem Laserstrahl, der von aussen durch ein Fenster 18 im Innengehäuse 1 hindurch auf die Aussenumfangsfläche 15 des Rings 14 im Bereich der dort vorhandenen Markierungen 16 auftrifft. Bei sich drehendem Rotor 8 trifft der Lichstrahl also abwechselnd auf eine Markierung 16 und die Ringoberfläche zwischen den Markierungen auf, und das mit unterschiedlicher Intensität zurückgeworfene Licht wird durch eine vor dem Fenster 18 aussen angeordnete Linse 19 fokussiert und über ein Glasfaserkabel 20 einem Sensor 21 zugeführt. Aus den derart erhaltenen Signalen lässt sich die Durchflussmenge pro Zeiteinheit ermitteln. Das Glasfaserkabel 20 ist an ein Aussengehäuse 22 angeschlossen, das aufschraubbar ist und in dem auch die Linse 19 auswechselbar angeordnet ist.

Einrichtungen zum Aussenden eines Lichtstrahlers und zum optischen Erfassen der reflektierten Lichtimpulse sind bekannt. Beispielsweise kann das Glasfaserkabel 20 in Längsrichtung voneinander getrennte Bereiche aufweisen, von denen der eine den gegen die Rotoraussenfläche 15 gerichteten Lichtstrahl leitet und durch den anderen Bereich die zurückgeworfenen Lichtimpulse zum optischen Sensor 21 geleitet werden.

Der Vorteil dieser Einrichtung ist, dass sie für die Erzeugung von Sigalen nicht auf die Unterbrechung eines Lichtganges angewiesen ist und damit einen die Flügel vollständig überdeckenden geschlossenen Ring ohne Fenster zulässt. Offensichtlich lässt sich mit dieser Einrichtung pro Rotorumdrehung nicht eine Zahl von Signalen entsprechend der Anzahl der je ein Fenster aufweisenden Flügel, sondern eine Vielzahl von Signalen entsprechend der Anzahl der auf dem Umfang des Rings vorhandenen Markierungen erzeugen. Die wesentlich erhöhte Signalfolge lässt die Genauigkeit des Durchflussmessers in gewissen Anwendungen steigen. Von Vorteil ist ebenfalls, dass der beschriebene Durchflussmesser auch für die Messung der Durchflussmenge jedes nichttransparenten Mediums geeignet ist.

Im Verein mit der grossen Signalzahl pro Umdrehung bringt die gesteigerte Ansprechempfindlichkeit des massearmen Rotors in allen Anwendungsbereichen ausserordentlich genaue Messergebnisse.

## Patentansprüche

1. Durchflussmesser mit einem im wesentlichen zylindrischen Durchlass (3), einem im Durchlass koaxial angeordneten, drehbar gelagerten und mit gekrümmten Flügeln (13) versehenen Rotor (8) und einem in Strömungsrichtung koaxial vor diesem im Durchlass angeordneten, schraubenförmigen Leitapparat (4) zum Aufteilen des durch den Durchlass strömenden Mediums in Teilströme und zur Drallerzeugung, um den Rotor durch Beaufschlagung seiner Flügel an ihrer konkaven Seite in Drehung zu versetzen, sowie einem mit dem Rotor zusammenwirkenden, ausserhalb des Durchlasses angeordneten Mittel (18-21) zur Signalerzeugung, dadurch gekennzeichnet, dass die Flügel vollflächig sind und dass der Rotor einen zur Rotorachse (9) koaxial angeordneten, zylindrischen Ring (14) aufweist, der die Flügel umgibt und an welchem diese mit ihren äusseren Enden verankert sind, und dass der Ring zum Zusammenwirken mit den Mitteln zur Signalerzeugung an seiner Aussenumfangsfläche (15) Markierungen (16) trägt.

2. Durchflussmesser nach Anspruch 1, dadurch gekennzeichnet, dass der Ring (14) an seiner Aussenumfangsfläche (15) umfangsmässig verteilt angeordnete Markierungen (16) aufweist, und die Mittel zur Signalerzeugung Lichtstrahl-Fokussierungsmittel (17) sowie einen optischen Sensor (21) zur Erzeugung von Signalen für die Ermittlung der Durchflussmenge aufweisen.

3. Durchflussmesser nach Anspruch 1 oder 2, dadurch gekennzeichnet, dass die Flügel (13) des Rotors (8) achsparallel gekrümmt ausgebildet sind und der vollflächige Ring (14) sich über die Breite der Flügel ersteckt.

4. Durchflussmesser nach Anspruch 2 oder 3, dadurch gekennzeichnet, dass der Ring (14), die Flügel (13) und die Rotorachse (9) einstückig ausgebildet sind.

5. Durchflussmesser nach Anspruch 3, dadurch gekennzeichnet, dass der Ring (14) in bezug auf die Flügelbreite in axialer Richtung symmetrisch angeordnet ist.

6. Durchflussmesser nach Anspruch 2, dadurch gekennzeichnet, dass die Aussenumfangsfläche (15) des Rings (14) eine Vielzahl von auf einer Kreislinie in gleichen Winkelabständen angeordneten Farbmarkierungen (16) aufweist.

7. Durchflussmesser nach Anspruch 2, dadurch gekennzeichnet, dass die Markierungen (16) als punktförmige Erhebungen ausgebildet sind.

8. Durchflussmesser nach einem der vorangehenden Ansprüche, dadurch gekennzeichnet, dass der Rotor (8) in einem Innengehäuse (1) angeordnet ist, der von einem Aussengehäuse (22) mit einer darin angeordneten Linse (19) zur Fokussierung des Lichtstrahls und mit einem Anschluss für ein Lichtleiterkabel (20) umschlossen ist, das den Durchflussmesser mit dem optischen Sensor (21) verbindet.

## Claims

1. A flowmeter with a substantially cylindrical passage duct (3), a rotor (8) coaxially arranged in the passage duct, mounted for rotation and provided with curved blades (13), and a helical distributor (4) arranged in the passage duct coaxially ahead of the latter in the direction of flow, for dividing the flow medium flowing through the passage duct into part flows and for producing a spin to set the rotor into rotational motion by action on its blades on their concave side, as well as a means (18-21) cooperating with the rotor and arranged outside the passage duct for generating signals, characterized in that the wall of the blades is unbroken and that the rotor has a cylindrical ring (14) arranged coaxially with the rotor shaft (9), which surrounds the blades and whereon the blades are anchored with their outer ends, and that the ring carries on its outer peripheral surface (15), marks (16) for cooperation with the means for generating the signals.

2. A flowmeter according to claim 1, characterized in that the ring (14) has on its outer peripheral surface (15), marks (16) arranged in a distribution over the circumference, and that the means for generating the signals have means (17) for focusing the light beam, as well as an optical sensor (21) for generating signals to ascertain the rate of flow.

3. A flowmeter according to claim 1 or 2, characterized in that the blades (13) of the rotor (8) are designed with an axially parallel curvature and that the ring (14) with its unbroken wall extends over the width of the blades.

4. A flowmeter according to claim 2 or 3, characterized in that the ring (14), the blades (13) and the rotor shaft (9) are made in one piece.

5. A flowmeter according to claim 3, characterized in that the ring (14) is arranged symmetrically in the axial direction with respect to the width of the blade.

6. A flowmeter according to claim 2, characterized in that the outer peripheral surface (15) of the ring (14) has a plurality of colour marks (16) arranged on a circular line at equal angular intervals.

7. A flowmeter according to claim 2, characterized in that the marks (16) are formed as pointed raised portions.

8. A flowmeter according to one of the preceding claims, characterized in that the rotor (8) is arranged in an inner casing (1) which is surrounded by an outer casing (22) with a lens (19) arranged therein for focusing the light beam, and with a connector for a light conductor cable (20) which connects the flowmeter to the optical sensor (21).

## Revendications

1. Débitmètre, comprenant une ouverture (3) sensiblement cylindrique, un rotor (8) monté coaxialement et de manière tournante dans l'ouverture et équipé d'ailettes (13) cintrées, et un appareil directeur (4) hélicoïdal disposé coaxialement dans l'ouverture, en amont dudit rotor, et destiné à séparer le fluide traversant l'ouverture en courants partiels et à produire une giration pour mettre le rotor en rotation en sollicitant ses ailettes sur leur surface concave, ainsi qu'un moyen (18 à 21) pour la production de signaux placé à l'extérieur de l'ouverture et coopérant avec le rotor, caractérisé en ce que les ailettes présentent des surfaces pleines et que le rotor comporte une bague cylindrique (14) montée coaxialement à l'axe (9) du rotor, qui entoure les ailettes et sur laquelle sont ancrées les extrémités extérieures de celles-ci, et que la bague porte sur sa surface périphérique extérieure (15) des marquages (16) pour la coopération avec les moyens pour la production de signaux.

2. Débitmètre selon la revendication 1, caractérisé en ce que la bague (14) présente sur sa surface périphérique extérieure (15) des marquages (16) répartis sur la circonférence, et que les moyens pour la production de signaux comprennent des moyens (17) pour la focalisation d'un faisceau lumineux ainsi qu'un détecteur optique (21) pour la production de signaux servant à déterminer le débit.

3. Débitmètre selon l'une des revendications 1 ou 2, caractérisé en ce que les ailettes (13) du rotor (8) sont cintrées parallèlement à l'axe et que la bague (14) à surface pleine s'étend sur la largeur des ailettes.

4. Débitmètre selon l'une des revendications 2 ou 3, caractérisé en ce que la bague (14), les ailettes (13) et l'axe (9) du rotor forment une seule pièce.

5. Débitmètre selon la revendication 3, caractérisé en ce que, dans la direction axiale, la bague (14) est disposée symétriquement par rapport à la largeur des ailettes.

6. Débitmètre selon la revendication 2, caractérisé en ce que la surface périphérique extérieure (15) de la bague (14) présente une multiplicité de marquages en couleurs (16) placés sur un cercle à des distances angulaires égales.

7. Débitmètre selon la revendication 2, caractérisé en ce que les marquages (16) sont réalisés sous la forme de bosses ponctuelles.

8. Débitmètre selon l'une quelconque des revendications précédentes, caractérisé en ce que le rotor (8) est monté dans un carter intérieur (1) qui est enveloppé par un carter extérieur (22) dans lequel sont disposés une lentille (19) pour la focalisation du faisceau lumineux, et un raccord pour un câble fibre optique (20) lequel relie le débitmètre au détecteur optique (21).
